# EUROPEAN PATENT APPLICATION

(11) **EP 4 317 265 A1**
(43) Date of publication of application: **07.02.2024**
(21) Application number: 22188809.2
(22) Date of filing: 04.08.2022
(51) Int. Cl.: C08J 5/04, C08G 69/26, D04H 3/009

(54) **METHOD OF PRODUCING AN ORGANO SHEET**

(71) Applicant: Kuraray Europe GmbH, 65795 Hattersheim (DE)
(72) Inventor: The designation of the inventor has not yet been filed
(74) Representative: Janßen, Christian Oliver

(57) **Abstract**

The present invention relates to a process for the production of an organo sheet using a woven textile and a melt-blown polyamide and to the use of the obtained organo sheet in automotive, aviation, space travel, railway, drones, urban air mobility (UAM), and sports applications.

## Description

### FIELD OF THE INVENTION

The present invention relates to a process for the production of an organo sheet using a woven textile and a melt-blown polyamide and to the use of the obtained organo sheet in automotive, aviation, space travel, railway, drones, urban air mobility (UAM), and sports applications.

### BACKGROUND

Polymer composites or even more specific fibre-reinforced polymer composites are a product class gaining more and more interest. Due to the possibility of achieving bespoken properties, application areas stretch as wide as from sub-maritime to space, from outside the human body to even inside it as well as all sorts of transportation to name but a few. Main characteristics of fibre reinforced polymers are durability, strength, corrosion resistance, recyclability and above all light weight.

An example of fibre reinforced polymers is an organo-sheet which is usually understood to be a plate-shaped semi-finished product of a continuous fibre-reinforced thermoplastic material, in which continuous fibres, such as carbon fibres, glass fibres, aramid fibres, coir, flax, sisal, ramie fibres or other natural or synthetic fibre materials are embedded into a thermoplastic matrix. The fibres are in the form of layings, woven fabrics or knit fabrics with a variety of different options of weaving and knitting structures. As thermoplastic material for the matrix, thermoplastic materials can be utilized such as polyester, polyamides, polycarbonates, polyolefins such as polyethylene or polypropylene, polyetheretherketone, polyetherimide, polyoxymethylene, polyphenylene sulphide), or polyvinyl difluoride. In particular, polyamide is commonly useful due to its good properties of adhesion to the fibres.

WO 2005/033393 describes composite fabric materials made of reinforcing fibres and a matrix material, and a manufacturing process thereof.

JP 2019011420 A discloses fiber-reinforced polyamide sheets or tapes comprising a polyamide with a glass transition temperature of 90°C or more and having seven or more carbon atoms for each amide group, and continuous fibers.

The production of organo sheets can be realised in a number of different ways. One kind of process uses extruded thermoplastic polymeric films as matrix which are laminated with the woven textile. The lamination or stacking of the polymeric film(s) and textile(s) is done in a batch-wise or a continuous process. The decisive part in the stacking process is so-called consolidation of the stack. While heating to temperatures above the melting point of the matrix polymer, the intrinsic rheology of the polymer is a major factor for sufficient penetration of the molten polymer in and between the fibres of the textile yielding intermingling and hence sufficient mechanical strength.

Some technologies consist of sprinkling fine powder of polymer onto optionally preheated textile. Followed by a heating step the sprinkles melt, yielding a type of polymer film on the textile. At a later stage, several of the resulting plies, being a single layer of textile and polymer matrix, are then stacked, heated and pressed to the desired overall thickness.

Other technologies utilise filmic materials where pre-fabricated, usually extruded polymeric films are stacked with textiles and subsequently heated and pressed yielding a fibre-reinforced resin material. For example, EP 3 932 992 A1 describes a method for producing a fibre-reinforced resin material including melt-extruding a polyamide resin composition into a film shape, applying the film-shaped polyamide resin composition to continuous reinforcing fibres arranged in parallel in at least one direction, and impregnating the polyamide resin composition into the continuous reinforcing fibres.

Moulding pre-fabricated, polymeric films to the final product and consolidation may be done in a single step, or in two separate steps allowing for greater freedom of fabrication. However, film production is commonly and economically done by melt extrusion or cast extrusion using suitable film extrusion equipment as known to the person skilled in the art. Melt extrusion of polymers, in particular of polymers having high melting points is demanding. This relates, for example, to some semi-aromatic polyamides having high melting temperatures of about 280°C or above.

An example of such high-melting semi-aromatic polyamides is the polyamide PA9T, i.e., a polyamide prepared from terephthalic acid and mixtures of 2-methyl-1,8-octanediamine and 1,9-nonanediamine. Extruding PA9T on standard equipment often yields materials not fit for purpose. This may be attributed to its special chemical structure resulting in distinguished crystalline and amorphous areas which interaction in the melt process causes macroscopic peculiarities. Subsequently, such melt extruded films often exhibit even large voids, gel particles, streaks, un-molten areas and non-homogeneous rough surfaces. Using low quality extrusion films incorporates the risk of leading to inhomogeneous organo sheets, both optical and mechanical performance wise. On the other hand, producing PA9T films by extrusion having sufficient quality is usually associated with low throughput and hence high conversion costs.

It is therefore an object of the present invention to provide a process for the production of an organo sheet using a woven textile and polyamide where the above-mentioned disadvantages observed when extruding high-melting polyamide films can be avoided.

The present inventors have discovered that using melt-blow moulding technology is a suitable and economical alternative to the extrusion of polyamide films. In addition, due to the nature of the resulting non-woven, a much larger surface area is existent compared to extruded polymeric films of the same basis weight. This results in an easier and faster heating and melting of the non-woven as compared to an identical grammage extruded polymer film and therefore to shorter cycle times. Being finer distributed as compared to the solid film, the polymer flows easier and earlier thus yielding an appropriate intermingling with the woven textile.

### SUMMARY OF THE INVENTION

In one embodiment the invention is directed to a process for the production of an organo sheet using a woven textile and a melt-blown polyamide.

In a further embodiment the invention is directed to the use of the organo sheet obtainable by the process in automotive, aviation, space travel, railway, drones, urban air mobility (UAM), and sports applications.

### DETAILED DESCRIPTION

Provided herein is a process for the production of an organo sheet using a woven textile and a melt-blown polyamide. The organo sheets obtainable by the process may be useful, for example, in automotive, aviation, space travel, railway, drones, urban air mobility (UAM), and sports applications.

### Definitions

Before addressing details of embodiments, some terms are defined or clarified.

As used herein, the term "organo sheet" is intended to embrace, without limitation, any plate-shaped semi-finished product of a continuous fibre-reinforced thermoplastic material, in which fabrics or textiles comprising continuous fibres, such as carbon fibres, glass fibres, aramid fibres, coir, flax, sisal, ramie fibres or other natural or synthetic fibre materials or mixtures thereof are embedded into a thermoplastic matrix. In contrast to organo sheets, "prepregs" are semi-finished products which have not yet been consolidated and hence have higher flexibility compared to organo sheets.

Organo sheets may be made from superimposed unidirectional, fibre-reinforced, thermoplastic tapes.

As used herein, the term "woven textile" is intended to embrace any construction where natural and/or synthetic fibres or yarns are woven into the textile with a variety of different weaving and/or knitting structures. This includes but is not limited to simple woven textiles which are flat, substantially two-dimensional structures with fibres or yarns in only two directions, typically formed by interlacing two sets of fibres or yarns perpendicular to each other.

As used herein, the term "melt-blown polyamide" refers to a structure of individual fibres or threads which are interlaid, but not in any regular, repeating manner (nonwoven) prepared by melt-blowing processes.

As used herein, the term "melt-blowing" or "melt-blown", refers to the process of extruding a molten thermoplastic material through a plurality of fine, usually circular, die capillaries as molten threads or filaments into a high velocity gas (e.g., air) stream which attenuates the filaments of molten thermoplastic material to reduce their diameter, which may be to a microfiber diameter. Thereafter, the melt-blown fibres are carried by the high velocity gas stream and are deposited on a collecting surface to form a web of randomly dispersed melt-blown fibres. The basic principle of melt-blowing is disclosed in Industrial and Engineering Chemistry, Vol. 48, No. 8 (p1342-1346), 1956, in which the basic apparatus and method are disclosed. A process of preparing melt-blown nonwoven fabrics from polyamides is described in JP2005-220447.

The term "polyamide" (PA) is intended to embrace polyamides and copolyamides where at least 90% of the recurring units are dicarboxylic acid and diamine units.

### Process for the production of organo sheets

Provided herein is a process for the production of an organo sheet using a woven textile and a melt-blown polyamide.

The process may comprise the following steps:
(a) placing one or more layers of the melt-blown polyamide over and/or under the woven textile to form a stack;
(b) applying heat and optionally pressure to the stack of step (a), wherein applying heat is made at a temperature sufficient to soften the melt-blown polyamide; and
(c) cooling the resulting product of step (b) to from the organo sheet,

The number of layers used for forming the stack in step (a) is not particularly limited. In one embodiment, the stack of step (a) is formed by placing at least one layer of the melt-blown polyamide over the woven textile and placing at least one layer of the melt-blown under the woven textile to form a three-layer structure of melt-blown/woven/melt-blown (MB/W/MB). Other embodiments may also be envisaged and include, without limitation 5, 6, 9, or 12 layers, such as MB/W/MB/MB/W/MB, MB/W/MB/W/MB, MB/W/MB/MB/W/MB/MB/W/MB/MB/W/MB, or MB/W/MB/W/MB/W/MB/W/MB.

The number of layers used for forming the stack in step (a) is chosen depending on the desired thickness of the organo sheet and the basis weight of the woven and the melt-blown layer.

The organo sheet preferably has a thickness in the range of 0.25 to 10 mm, preferably in the range of 0.5 to 5 mm, more preferably in the range of 0.5 to 2.0 mm. Typically, organo sheets being used, for example, in the automotive industry have a thickness of about 0.5 mm, or of about 1.0 mm or of about 2.0 mm or 3.00 mm.

In one embodiment, applying heat in step (b) is made at a temperature in the range of 270°C to 450°C, preferably in the range of 290°C to 400°C, more preferably in the range of 300°C to 350°C. In one embedment applying heat in step (b) is made for a time period of 2,5 seconds to 10 000 seconds, preferably for a time period of 20 seconds to 1000 seconds, more preferably for a time period of 30 seconds to 150 seconds.

In a preferred embodiment applying heat in step (b) is made is made at a temperature in the range of 270°C to 450°C, preferably in the range of 290°C to 400°C, more preferably in the range of 300°C to 350°C and for a time period of 5 seconds to 10 000 seconds, preferably for a time period of 20 seconds to 1000 seconds, more preferably for a time period of 30 seconds to 150 seconds.

The woven textile is preferably made by weaving (and/or knitting) natural or artificial fibre materials. The fibre materials are preferably selected from the group consisting of carbon fibres, glass fibres, aramid fibres, coir, flax, sisal, ramie fibres and mixtures thereof. The fibre material may include hybrid (commingled) polymeric and artificial or natural fibres or hybrid (commingled) glass and carbon fibres. In a preferred embodiment the fibre materials are glass fibres. Suitable glass fibre woven textiles are, for example, commercially available from Nitto Boseki Co., Johns Manville, Owens Corning and Nippon Electric Glass Co., Ltd.

In a preferred embodiment, the fibre materials, in particular the glass and carbon fibres may include a sizing agent or surface-modifier to improve the interaction between the fibre and the polyamide. As the sizing agent, any publicly-known sizing agents and surface modifiers such as epoxy-base compound, isocyanate-base compound, silane-base compound, and titanate-base compound may be used, wherein the amount of adhesion is preferably 10% by weight or less, and more preferably 0.05 to 5% by weight, of the weight of fibre.

The silane-based compounds may be selected from triaryloxysilane compounds and trialkoxysilane compounds, such as aminopropyltriethoxysilane, phenylaminopropyltrimethoxysilane, glycidylpropyltriethoxysilane, methacryloxypropyltrimethoxysilane, vinyltriethoxysilane, ureidosilanes, mercaptosilanes, vinylsilanes, and imidazole silanes, preferably selected from aminopropyltriethoxysilane and glycidylpropyltriethoxysilane.

The woven textile may have a basis weight in the range of 50 to 1000 g/m², preferably in the range of 250 to 800 g/m², more preferably in the range of 400 to 640 g/m².

The melt blown polyamide is preferably a nonwoven. The polyamide melt blown nonwoven is preferably prepared from a polyamide resin having an intrinsic viscosity [η] measured in concentrated sulfuric acid at 30° C in the range of 0.4 to 1.2 dl/g, preferably in the range of 0.6 to 1.0 dl/g, more preferably in the range of 0.6 to 0.8 dl/g. If the intrinsic viscosity of the polyamide is in these ranges, it will be easy to form a melt blown nonwoven.

In one embodiment, the polyamide melt-blown may be produced by the steps of heating a polyamide to a temperature above the melting point of the polyamide, for example in an extruder, discharging the molten composition from a spinning nozzle in fibrous form, and then drawing the discharged molten composition in fibrous form by a high-temperature and high-speed gas to obtain a plurality of melt-blown fibres on a collecting device. The temperature of the high-temperature and high-speed gas is preferably in the range of 300°C to 350 °C. The drawing pressure of the high-temperature and high-speed gas is preferably between 3 kg/cm² and 7 kg/cm². The high-temperature and high-speed gas may be air or nitrogen.

In one embodiment each melt-blown fibre has a diameter of from 0.1 to 15 micrometres preferably in the range of 2 to 4 micrometres.

The melt-blown polyamide may have a basis weight in the range of 5 to 400 g/m², preferably in the range of 50 to 300 g/m², more preferably in the range of 100 to 200 g/m². The basis weight of the melt-blown polyamide is preferably chosen to have enough polyamide to fill the voids and gaps in the woven textile. The minimum amount of polyamide (i.e., the minimum basis weight of the melt-blown polyamide) needed to fill the voids and gaps in the woven textile can be estimated from properties of the woven textile, i.e., the basis weight and the density of the fibres forming the textile. Using less than the minimum amount is usually undesired since the remaining voids or gaps in the final product, i.e., free spaces in the fibre resin matrix that are not fibre or polyamide, may lead to unsatisfactory mechanical properties. Using too much polyamide (e.g., twice the amount needed to fill the gaps and voids) should also be avoided since this reduces the fibre volume fraction (FVF), i.e., the percentage of fibre volume in the entire volume of the final product resulting in a deterioration of the mechanical properties.

In preferred embodiment the woven textile has a basis weight in the range of 50 to 1000 g/m², preferably in the range of 250 to 800 g/m², more preferably in the range of 400 to 640 g/m² and the melt-blown polyamide has a basis weight in the range of 5 to 400 g/m², preferably in the range of 50 to 300 g/m², more preferably in the range of 100 to 200 g/m².

The polyamide has a dicarboxylic acid unit and a diamine unit. In a preferred embodiment at least a part of the dicarboxylic acid unit is an aromatic dicarboxylic acid unit, preferably selected from terephthalic acid units and/or isophthalic acid units. Such units improve the strength of polyamides under high temperature and high humidity. Preferably, 40 to 100 mol%, more preferably 60 to 100 mol% and most preferably 80 to 100 mol% of the dicarboxylic acid unit is formed of terephthalic acid and/or isophthalic acid. In one embodiment 40 to 100 mol%, more preferably 60 to 100 mol% and most preferably 80 to 100 mol% of the dicarboxylic acid unit is formed of terephthalic acid.

Dicarboxylic acid units other than terephthalic or isophthalic acid units include, for example, units derive from aliphatic dicarboxylic acids, such as oxalic acid, malonic acid, succinic acid, glutaric acid, adipic acid, pimelic acid, suberic acid, azelaic acid, sebacic acid, undecanedicarboxylic acid, dodecanedicarboxylic acid, dimethylmalonic acid, 3-diethylsuccinic acid, 2,2-dimethylglutaric acid, 2-methyladipic acid and trimethyladipic acid; alicyclic dicarboxylic acids, such as 1,3-cyclopentanedicarboxylic acid, 1,3-cyclohexanedicarboxylic acid, 1,4-cyclohexane dicarboxylic acid, cycloheptane dicarboxylic acid, cyclooctane dicarboxylic acid, and cyclodecane dicarboxylic acid; aromatic dicarboxylic acids, such as 1,4-naphthalenedicarboxylic acid, 2,6-naphthalenedicarboxylic acid, 2,7-naphthalenedicarboxylic acid, diphenylmethane-4,4'-dicarboxylic acid, and diphenylsulfone-4,4'-dicarboxylic acid. These units may be used alone or in combination of two or more.

Provided that the melt blowing process is not negatively affected, the polyamide may include a unit derived from a trivalent or higher polyvalent carboxylic acid such as trimellitic acid, trimesic acid, pyromellitic acid or the like.

In a preferred embodiment at least a part of the diamine unit are aliphatic diamine units having 6 to 12 carbon atoms. Such units improve the strength of polyamides under high humidity. Preferably, 60 to 100 mol%, more preferably 70 to 100 mol% and most preferably 90 to 100 mol% of the diamine unit is formed by aliphatic diamines having 6 to 12 carbon atoms.

Examples of the aliphatic diamine units having 6 to 12 carbon atoms include, for example, 1,6-hexanediamine, 1,7-heptanediamine, 1,8-octanediamine, 1,9-nonanediamine, 1,10-decanediamine, 1,11-undecanediamine, 1,12-dodecanediamine, 1,1-dimethyl-1,4-butanediamine, 1-ethyl-1,4-butanediamine, 1,2-dimethyl-1,4-butanediamine, 1,3-dimethyl-1,4-butanediamine, 1,4-dimethyl-1,4-butanediamine, 2,3-dimethyl-1,4-butanediamine, 2-methyl-1,5-pentanediamine (often referred to as MPMD or D), 3-methyl-1,5-pentanediamine, 2,5-dimethyl-1,6-hexanediamine, 2,4-dimethyl-1,6-hexanediamine, 3,3-dimethyl-1,6-hexanediamine, 2,2-dimethyl-1,6-hexanediamine, 2,2,4-trimethyl-1,6-hexanediamine, 2,4,4-trimethyl-1,6-hexanediamine, 2,4-diphenyl-1,6-hexanediamine, 2,2-dimethyl-1,7-heptanediamine, 2,3-dimethyl-1,7-heptanediamine, 2,4-dimethyl-1,7-heptanediamine, 2,5-dimethyl-1,7-heptanediamine, 2-ethyl-1,7-heptandediamine, 2-propyl-1,6-hexanediane, 2-methyl-1,8-octanediamine, 3-methyl-1,8-octanediamine, 4-methyl-1,8-octanediamine, and 1,3-dimethyl-1,8-octanediamine, 1,4-dimethyl-1,8-octanediamine, 2,4-dimethyl-1,8-octanediamine, and 3,4-dimethyl-1,8-octanediamine. These units may be used alone or in combination of two or more.

In a preferred embodiment the diamine unit of the polyamide includes units derived from 1,6-hexanediamine, 2-methyl-1,5-pentanediamine, 1,8-octanediamine, 2-ethyl-1,7-heptandediamine, 2-propyl-1,6-hexanediane, 2-methyl-1,8-octanediamine, 1,9-nonanediamine, 1,10-decanediamine, 1,11-undecanediamine, 1,12-dodecanediamine and mixtures thereof, and more preferably a structural unit derived from at least one member selected from the group consisting of 1,9-nonanediamine and 2-methyl-1,8-octanediamine.

The polyamide may further comprise units derived from aminocarboxylic acids. Examples of the aminocarboxylic acid units include units derived from lactams such as caprolactam and lauryllactam; and units derived from aminocarboxylic acids such as 11 -aminoundecanoic acid and 12-aminododecanoic acid. The content of the aminocarboxylic acid unit in the polyamide is preferably 40 mol% or less, more preferably 20 mol% or less, based on 100 mol% in total amount of the diamine unit and the dicarboxylic acid and optional trivalent or higher polyvalent carboxylic acid unit and the of the polyamide.

The polyamide is preferably selected from the group consisting PA66/6T, PA61/6T, PA66/6I/6T, PA6T/DT, PA9T, PA10T, PA12T, PA10T/10I, PA10T/106, PA10T/12, and PA10T/11 and mixtures thereof. By using such semi-aromatic polyamides, the mechanical strength esp. under high humidity conditions and the hydrolytic stability of the obtained organo sheet can be increased.

In one preferred embodiment the polyamide is PA9T. In a preferred embodiment, in the PA9T, the molar ratio of units derived from 1,9-nonanediamine and units derived from a 2-methyl-1,8-octanediamine is in the range of 95/5 to 40/60, more preferably in the range of 90/10 to 50/50 or from 55/45 to 45/55.

Preferably, the polyamide has a melting point of 270°C or more, preferably of 290°C or more, more preferably in the range of 295°C and 330°C. Examples of such polyamides are described, for example, in US 2021/0340377 A1. The melting point of the polyamide may be determined as disclosed in US 2021/0340377 A1.

The melt viscosity of the polyamide is preferably 100 Pa·s or greater, more preferably 120 Pa·s or greater, and even more preferably 140 Pa·s or greater. The upper limit is preferably 400 Pa·s or less, more preferably 380 Pa·s or less, even more preferably 350 Pa·s or less, and yet even more preferably 300 Pa·s or less. The melt viscosity can be measured in accordance with a method described in EP 3 932 992 A1.

In a preferred embodiment the polyamide is PA9T and the woven textile is made from glass fibres.

### Applications and uses

A wide range of articles can be made using the organo sheets described herein. These include, but are not limited to constructive applications for example in automotive, aviation, space travel, railway, drones, urban air mobility (UAM), sports and other application fields. The present application also relates to an organo sheet obtainable by the inventive process made of a woven textile and a melt-blown polyamide. The organo sheet preferably comprises melt-blown PA9T, and has preferably a thickness in the range of 0.5 to 5.0 mm.

### EXAMPLES

### Test Methods

Flexural modulus and flexural strength were measured on a Zwick Roell AllroundLine Z100 machine using the 3 point bending test according to DIN EN ISO 14125:2011-05.

A pre-load of 15 MPa was applied to neglect influence of cutting process. Samples of 80 x 25 mm were cut by laser beam in 0° direction (machine direction) and in 90° direction (cross-machine direction). Before measurement, the samples were dried for 24 h at 80°C in vacuum oven.

The following test conditions were used:
Effective span: 32mm; Radius fin: R=5.0mm; Radius plating: 2.0mm
Load cell: 100kN; Position encoder: Traverse
Test speed modulus: 1 mm/min. Test speed strength: 5mm/min.
Pre load: 15MPa; Modulus: 0.05 to 0.25%; Stiffness σ1: 0.05 to 0.25%
Stiffness σ2: 0.4 to 0.6%

In the tables, "Eᵣ₀" is the flexural modulus in the machine direction (orientation of 0°) and "Eᵣ₉₀" is the flexural modulus in cross-machine direction (orientation of 90°). "StAbw Eᵣ₀" and "StAbw Eᵣ₉₀" are the standard deviation of the flexural modulus in machine direction and in cross-machine direction, respectively. "σₘₐₓ₀" and "σₘₐₓ₉₀" are flexural strength in machine direction and in cross-machine direction, respectively. "StAbw σₘₐₓ₀" and "StAbw σₘₐₓ₉₀" are the standard deviation of the flexural strength in machine direction and in cross-machine direction, respectively.

Basis weight (mass per unit area) was measured weighing.

Determination of the thickness of each layer was determined measuring using a sliding calliper.

All example sheets were made on a Teubert IHP 100/66 CCM machine.

### Example 1

A three-layer organo sheet was produced using two layers of a PA9T melt-blown polyamide and one layer of glass fabric (layer sequence: non-woven/textile/non-woven). The PA9T melt-blown polyamide was prepared by melt-blowing PA9T. The PA9T was a commercial grade PA9T from Kuraray (Genestar^{™} grade P72010-35). The melt-blown PA9T had a thickness of about 400 µm +/- 30 µm and a basis weight of 154 g/m² +/- 2 g/m².

The glass fabric layer (GF)was a glass fabric of the twill weave type and was prepared from a glass roving having a basis weight of 600 g/m² and a linear mass density of 1200 tex. An amino silane was used as sizing agent.

The organo sheet was prepared using the following processing conditions:

| Pressure | Press time | Cycle time | Feed rate | Temperature | | | | | Production rate |
|---|---|---|---|---|---|---|---|---|---|
| | | | | Heat Z1 | Heat Z2 | Heat Z3 | Cool Z1 | Cool Z2 | |
| set | set | real | set | set | set | set | set | set | real |
| bar | s | s | mm | °C | °C | °C | °C | °C | m/h |
| 20 | 7,5 | 11,829 | 25 | 300 | 340 | 340 | 250 | 95 | 7,61 |

The consolidated structure had a thickness of about 0.5 mm.

### Example 2

A twelve-layer organo sheet was produced using eight layers of a PA9T melt-blown polyamide (NW) and four layer of glass fabric (GF) with a layer sequence of NW/GF/NW/NW/GF/NW/NW/GF/NW/NW/GF/NW

The PA9T melt-blown polyamide and the glass fabric layer (GF) were the same as in Example 1.

The following processing conditions were used: Process set up: temperature 340°C at 20 bar pressure, 7.5 seconds press time and 25 mm feed rate (set stroke per cycle). The final product had a fibre volume fraction (FVF) of 46.4 vol% / 65,0 vol%.

The consolidated structure had a thickness of about 2.0 mm.

### Comparative Example 2

A twelve-layer organo sheet was produced using eight layers of a PA9T film (FI) and four layer of glass fabric (GF) with a layer sequence of FI/GF/Fl/Fl/GF/Fl/Fl/GF/Fl/Fl/GF/Fl

The PA9T film prepared by film extrusion using the same PA9T material as in the Example 1 and 2. Conditions: single screw extruder fed with dry PA9T. Extrusion was conducted under venting using temperature settings at 315°C (+/- 5°C). Tₘₐₓ = 320°C. The film thickness was 140 µm (+/- 3 µm).

The glass fabric layer (GF) was the same as in Example 2.

### Results

| | | | Example 2 | Comparative Example 2 |
|---|---|---|---|---|
| Flexural Modulus | Eᵣ₀ | [GPa] | 24.11 | 21.5 |
| | StabW Eᵣ₀ | [GPa] | 1.35 | n.d. |
| Flexural Strength | σₘₐₓ₀ | [MPa] | 709.26 | 654 |
| | StabW σₘₐₓ₀ | [MPa] | 42.28 | n.d. |
| Flexural Modulus | Eᵣ₉₀ | [GPa] | 24.88 | 21.1 |
| | StabW Eᵣ₉₀ | [GPa] | 0.61 | n.d. |
| Flexural Strength | σₘₐₓ₉₀ | [MPa] | 760.09 | 660 |
| | StabW σₘₐₓ₉₀ | [MPa] | 14.40 | n.d. |

An analysis of the resulting mechanical data shows that compared to the use of the extrusion film, no substantial difference in mechanical (and optical) performance is observed, although a slight trend towards higher mechanical performance for the organo sheet with a melt-blown layer was observed. Thus, using a melt-blown non-woven resulted in at least equivalent, mostly better performing organo sheet. In addition, the basis weights are easier to vary or handle with non-woven, which is advantageous in reliably achieving the desired matrix/fiber ratio.

Effects of undesired shifting of filaments of the textile as can occasionally be observed are avoided when employing non-woven melt-blown fabrics instead of films. This is due to the products nature and results in more robust processing. Consequently, mechanical and optical deviations caused by ill-aligned fibres can be excluded.

In addition, the process of the present invention using melt-blown layers rather than extruded films allows the preparation of very homogeneous product with same mechanical performance on each spot of the organo sheet.

## Claims

1. A process for the production of an organo sheet using a woven textile and a melt-blown polyamide.

2. The process of claim 1 comprising
(a) placing one or more layers of the melt-blown polyamide over and/or under the woven textile to form a stack;
(b) applying heat and optionally pressure to the stack of step (a), wherein applying heat is made at a temperature sufficient to soften the melt-blown polyamide; and
(c) cooling the resulting product of step (b) to from the organo sheet,

3. The process of claim 1 or 2, wherein the melt-blown polyamide is a melt-blown non-woven polyamide.

4. The process any one of claims 1 to 3 wherein the polyamide is selected from the group consisting PA66/6T, PA6I/6T, PA66/6I/6T, PA6T/DT, PA9T, PA10T, PA12T, PA10T/10I, PA10T/106, PA10T/12, and PA10T/11 and mixtures thereof.

5. The process of any one of claims 1 to 4, wherein the polyamide is PA9T.

6. The process of any one of claims 1 to 5, wherein the woven textile is made from natural or artificial fibre materials, preferably selected from the group consisting of carbon fibres, glass fibres, aramid fibres, coir, flax, sisal, ramie fibres and mixtures thereof.

7. The process of any one of claims 1 to 6, wherein the woven textile is made from glass fibres.

8. The process of any one of claims 1 to 7, wherein the polyamide is PA9T and the woven textile is made from glass fibres.

9. The process of any one of claims 2 to 8, wherein the stack of step (a) is formed by placing at least on layer of the melt-blown polyamide over the woven textile and placing at least one layer of the melt-blown under the woven textile to form a three-layer structure of melt-blown/woven/melt-blown.

10. The process of any one of claims 2 to 9, wherein applying heat in step (b) is made at a temperature in the range of 270°C to 450°C, preferably in the range of 290°C to 400°C, more preferably in the range of 300°C to 350°C, and/or wherein applying heat in step (b) is made for a time period of 5 seconds to 10 000 seconds, preferably for a time period of 20 seconds to 1000 seconds, more preferably for a time period of 30 seconds to 150 seconds.

11. The process of any one of claims 1 to 10, wherein the woven textile has a basis weight in the range of 50 to 1000 g/m², preferably in the range of 250 to 800 g/m², more preferably in the range of 400 to 640 g/m² and/or wherein the melt-blown polyamide has a basis weight in the range of 5 to 400 g/m², preferably in the range of 50 to 300 g/m², more preferably in the range of 100 to 200 g/m².

12. The process of any one of claims 1 to 10, wherein the polyamide has a melting point of 270°C or more, preferably of 290°C or more, more preferably in the range of 295°C and 330°C.

13. Use of the organo sheet obtainable by the process of any one of claims 1 to 8 in automotive, aviation, space travel, railway, drones, UAM, and sports applications.

14. An organo sheet obtainable by the process of any one of claims 1 to 8 made of a woven textile and a melt-blown polyamide.
